# EUROPEAN PATENT APPLICATION

(11) **EP 1 609 573 A1**
(43) Date of publication of application: **28.12.2005**
(21) Application number: 04724184.9
(22) Date of filing: 29.03.2004
(51) Int. Cl.: B29B 17/00

(54) **MOLDED ARTICLE OF RECLAIMED THERMOPLASTIC RESIN**

(30) Priority: 01.04.2003 JP 2003097819
(71) Applicant: Suzuka Fuji Xerox Co., Ltd., Suzuka-shi, Mie 519-0393 (JP); Tohpe Corporation, Sakai-shi, Osaka 592-8331 (JP)
(72) Inventor: SUZUKI, Yasuhiro, Suzuka-shi, Mie 519-0393 (JP); OIDO, Hidetoshi, Ayama-gun, Mie 519-1402 (JP)
(74) Representative: Grünecker, Kinkeldey, Stockmair & Schwanhäusser Anwaltssozietät
(86) International application number: PCT/JP2004/004465
(87) International publication number: WO 2004/089591

(57) **Abstract**

A formed regenerated thermoplastic resin product is obtained by grinding a coated formed product mainly comprising a thermoplastic resin and at least partly coated with a coating compound mainly comprising a thermoplastic resin having compatibility with the thermoplastic resin with the coat left attached thereto, and then re-forming it. Since the coating compound comprises a pigment incorporated therein, the pigment has been subjected to surface treatment with a resin having compatibility with the thermoplastic resin constituting the formed product and the thermoplastic resin constituting the coating compound, the formed regenerated thermoplastic product can have intact material properties even when recycled.

## Description

### Technical Field

The present invention relates to a formed regenerated thermoplastic resin product obtained by grinding a coated formed product with the surface coat left unseparated or unpeeled, and then re-forming it.

### Background Art

It is known that when a formed product comprising a thermoplastic resin with a coat layer (coated formed product) is recycled with the coat layer left attached thereto without having the coat layer separated/peeled therefrom in the case where the vehicle (thermosetting or thermoplastic resin constituting the coating compound) of the coating compound has no compatibility with the forming resin, phase separation occurs in the coating compound resin in the step of heat melting, and the formed resin product thus recycled exhibits deterioration in physical properties such as strength.

It has thus been proposed that a coating compound comprising as a vehicle a coating resin having compatibility with a thermoplastic resin which is a main component of the formed product be used to allow recycling without peeling the coat layer (see, e.g., Patent 3, 289, 914) .

However, in recent years, plastic housing for household appliances and OA devices have been often coated with a metallic coating compound excellent design, and it has been more often practiced to incorporate pigments such as aluminum flake in such a metallic coating compound in a large amount. There arises a problem that when a coated formed product coated with a coating compound containing such a pigment is recycled with the coat layer left attached thereto, the formed product thus recycled exhibits deterioration in physical properties such as strength.

Referring to the strength of the resin regenerated, since the pigment such as aluminum flake is incompatible with the resin constituting the formed product or the resin constituting the coating compound, the pigment and the resin of the formed product are separated from each other, causing the deterioration of physical properties.

The present invention has been worked out to solve the aforementioned problems and its object is to provide a formed regenerated thermoplastic resin product recycled without separating or peeling the coat from a coated formed product which is not subject to deterioration of physical properties or other effects by pigments which have entered during the process of grinding and re-forming.

### Disclosure of the Invention

The formed regenerated thermoplastic resin product described in Claim 1 is a formed regenerated thermoplastic resin product obtained by grinding a coated formed product mainly comprising a thermoplastic resin and at least partly coated with a coating compound mainly comprising a thermoplastic resin having compatibility with the thermoplastic resin with the coat left attached thereto, and then re-forming it, wherein the coating compound comprises a pigment incorporated therein, the pigment having been subjected to surface treatment with a resin having compatibility with the thermoplastic resin constituting the formed product and the thermoplastic resin constituting the coating compound, whereby the deterioration of physical properties can be inhibited even when the pigment is dispersed in the regenerated formed product.

The term "having compatibility" as used herein is meant to indicate a nature that any of: the thermoplastic resin which is a main component of the formed product and/or the thermoplastic resin constituting the coating compound; and the resin spread over the surface of the pigment is melted at the step of heat melting to cause physical bonding thereof by heat fusion, heat bonding, intermolecular force, anchoring effect, diffusion or the like and it can be confirmed to see whether or not bonding is caused, i.e., whether or not it is compatible by observing under transmission electron microscope to see whether or not peeling occurs.

Besides the aforementioned nature, the case where the respective resins are mixed with each other at molecular level is included.

The formed regenerated thermoplastic resin product described in Claim 2 is a formed regenerated thermoplastic resin product as described in Claim 1, wherein the pigment is an inorganic and/or organic compound, whereby the pigment can be coated with a resin, making it possible to inhibit the deterioration of physical properties even when the pigment is dispersed in the regenerated formed product.

The formed regenerated thermoplastic resin product described in Claim 3 is a formed regenerated thermoplastic resin product as described in Claim 1, wherein the pigment is an aluminum flake, whereby the deterioration of physical properties can be inhibited even when a coated formed product coated with a metallic coating compound excellent in design is ground and re-formed.

The formed regenerated thermoplastic resin product described in Claim 4 is a formed regenerated thermoplastic resin product as described in Claim 2 or 3, wherein the thermoplastic resin constituting the coating compound is a thermoplastic acrylic resin or styrene- modified acrylic resin, whereby the aluminum flake coated with a resin has compatibility, making it possible to inhibit the deterioration of physical properties even when the pigment is dispersed in the regenerated formed product.

The formed regenerated thermoplastic resin product described in Claim 5 is a formed regenerated thermoplastic resin product as described in Claim 3, wherein the aluminum flake is coated with an organic polymer, whereby the deterioration of physical properties can be inhibited even when a coated formed product coated with a metallic coating compound excellent in design is ground and re-formed.

The formed regenerated thermoplastic product described in Claim 6 is a formed regenerated thermoplastic product as described in Claim 5, wherein the organic polymer is an acrylic resin, whereby the deterioration of physical properties can be inhibited even when a coated formed product coated with a metallic coating compound excellent in design is ground and re-formed.

The formed regenerated thermoplastic resin product described in Claim 7 is a formed regenerated thermoplastic resin product as described in Claim 5, wherein the aluminum flake is coated with a copolymer obtained by dissolving an ethylenically unsaturated monomer in an organic solvent, and then subjecting the solution to heat polymerization in the presence of a polymerization initiator or by reacting at least two selected from the group consisting of oligomers and monomers having at least one polymerizable double bond, whereby the deterioration of physical properties can be inhibited even when a coated formed product coated with a metallic coating compound excellent in design is ground and re-formed.

The formed regenerated thermoplastic resin product described in Claim 8 is a formed regenerated thermoplastic resin product as described in Claim 5, wherein the spread of the organic polymer over the aluminum flake is 5% by weight or more based on the weight of the aluminum flake, whereby there occurs no exfoliation between the resins constituting the pigment and the formed product, making it possible to inhibit the deterioration of physical properties, even when a coated formed product coated with a metallic coating compound excellent in design is ground and re-formed.

### (Advantage of the Invention)

Even when a coated formed product mainly comprising a thermoplastic resin is ground with its coat left attached thereto and re-formed for recycling, an effect can be exerted of inhibiting the deterioration of physical properties such as mechanical strength of formed regenerated thermoplastic resin product having a coat layer mixed therein because the pigment has compatibility.

### Brief Description of the Drawing

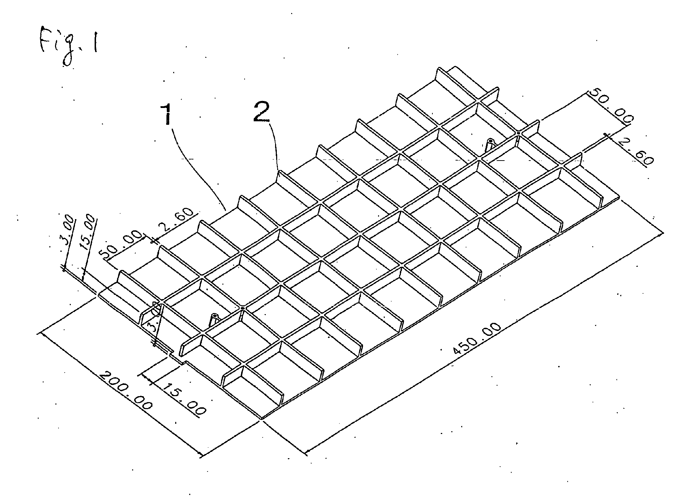

Fig. 1 is a perspective view illustrating an embodiment of the formed regenerated thermoplastic product of the present invention.

### Best Mode for Carrying Out the Invention

The present invention will be described in detail hereinafter.

### [Thermoplastic resin]

In the present invention, the thermoplastic resin to be used as a material of formed product is not limited in its kind so far as it is a thermoplastic resin which is commonly used in forming.

Examples of the thermoplastic resin include polystyrene-based resins obtained by the polymerization of styrene-based monomers such as polystyrene and impact-resistant polystyrene, styrene-based resins which are copolymers of nitrile-based monomer with styrene-based monomer such as acrylonitrile-styrene copolymer, nitrile-based monomer-styrene-based monomer-butadiene-based rubbery polymer and olefin- based rubbery polymer, resins made of acryl-based rubbery polymer such as styrene-based resin, e.g., acrylonitrile-butadiene or ethylene rubber or acrylic rubber-styrene copolymer (ABS and AbS), polyolefin-based resins such as polyethylene (PE) and polypropylene (including PP and PP containing olefin-based rubber), engineering plastics such as polyphenylene ether (including PPE, modified PPE and modified PPe), polycarbonate (PC), polyamide (PA), polysulfone (PSF), polyetherimide (PEI) and polymethyl methacrylate (PMMA), polyester resins such as polyethylene terephthalate (PET) and polybutylene terephthalate (PBT), vinyl-based resins such as vinyl chloride (PVC), and mixture of two or more of these thermoplastic resins.

Those particularly useful as a material of formed product to be used in the present invention are polystyrene-based resins, nitrile-based monomer- styrene-based monomer copolymers, PPE, ABS, AAS (ASA), AES, impact-resistant polystyrenes, ABS and/or PPE containing HIPS (including HiPS), PP, mixture of ABS and/or HIPS (including HiPS) with PC, PA, PBT, PSF, PEI, etc., polymer blends, or polymer alloys.

Some of the aforementioned thermoplastic resins will be described in detail hereinafter.

### (A: Styrene-based resin)

The styrene-based resin to which the present invention applies is a resin comprising a styrene-based monomer incorporated in a polymer in an amount of at least 25% by weight, and examples thereof include homopolymers of styrene-based monomers or copolymers of two or more of the styrene-based monomers, copolymers of the styrene-based monomers with one or more of other monomers copolymerizable with the styrene-based monomers, microblends or polymer blends of the aforementioned styrene-based resins and rubbery polymers such as diene-based rubbers obtained by the graft polymerization of the aforementioned diene-based, olefin-based or acryl-based rubber with one or more of the aforementioned styrene-based monomers (including HiPS), etc.

Representative examples of the aforementioned styrene-based resins include polystyrenes (PS) which are styrene homopolymers, impact-resistant polystyrenes which are blend polymers of styrene graft rubber-based polymer obtained by the graft polymerization of the aforementioned diene-based rubbery polymer, acryl-based rubbery polymer or olefin-based rubbery polymer with styrene and polystyrene {HIPS (PS containing graft diene-based rubbery polymer), HiPS}, acrylonitrile- styrene copolymers (AS), styrene-butadiene copolymers, styrene-α-methylstyrene copolymers, styrene-maleic anhydride copolymers, styrene-methyl methacrylate copolymers, styrene-ethylene copolymers, styrene-ethylene-propylene-butadiene copolymers, ABS resins having a blend of graft rubber-based polymer obtained by the graft copolymerization of diene-based rubbery polymer with acrylonitrile and styrene and acrylonitrile-styrene copolymer, ACS having chlorinated polyethylene and acrylonitrile-styrene copolymer in admixture, AES (AbS) having an acrylonitrile-styrene terpolymer containing a graft olefin-based rubbery polymer obtained by the graft polymerization of olefin-based rubbery polymer with acrylonitrile and styrene and an acrylonitrile-styrene copolymer in admixture, AAS {(ASA) (AbS)} having an acrylonitrile- styrene terpolymer containing an acrylic rubber obtained by the graft polymerization of acryl-based rubbery polymer with acrylonitrile and styrene and an acrylonitrile-styrene copolymer in admixture, ASiS having an acrylonitrile-dimethyl siloxane-styrene copolymer and an acrylonitrile-butadiene-styrene copolymer resin in admixture, resins having a graft olefin-based rubbery polymer obtained by the graft polymerization of olefin-based rubbery polymer or acryl- based rubbery polymer with styrene and a styrene polymer in admixture, resins having a graft acryl-based rubbery polymer obtained by the graft polymerization of acryl- based rubbery polymer with styrene and a styrene polymer in admixture (HiPS), etc.

In the present invention, AAS and AES are each referred to as "AbS" and PS resin reinforced (compounded) with a graft olefin-based rubbery polymer and/or graft acryl-based rubbery polymer is referred to as "HiPS".

### (B: Polyphenylene ether (PPE)-based resin)

Representative examples of the PPE-based resin to which the present invention applies include poly(2,6-dimethyl-1,4-phenyleneether) obtained by the oxidative polymerization of 2, 6-xylenol in the presence of a copper catalyst, and further examples of the PPE-based resin include copolymers of 2,6-dimethyl-1,4-phenyleneether with 2,3,6-trimethyl-1,4-phenylene ether, copolymers of 2,6-diemtylphenol with 2,3,6-trimethylphenol, etc.

Further, those obtained by modifying the aforementioned PPE-based resins with a styrene-based resin and/or amide-based resin, etc. are included in the PPE-based resins of the present invention.

### (C: Polycarbonate resin)

In the present invention, PC resin may be singly used as a formable (moldable) thermoplastic resin but may be used in admixture mainly with the aforementioned styrene-based resin, PPE-based resin or the like so that it is used as a material called polymer alloy/polymer blend.

The aforementioned PC resin (aromatic PC resin) is not specifically limited so far as it is a polyester carbonate derived from aromatic dihydroxy compound.

As the aforementioned aromatic dihydroxy compound there may be used, e.g., 2,2-bis(4-hydroxyphenyl) propane (also referred to as "bisphenol A"), tetramethyl bisphenol A, tetrabromylbisphenol A, bis(4-hydroxy phenyl)-p-diisopropylbenzene, hydroquinone, resorcinol, 4,4'-dihydroxydiphenyl or the like, but bis (4-hydroxyphenyl)alkane-based dihydroxy compound is normally selected, and bisphenol A or combination of bisphenol A and other aromatic dihydroxy compounds is particularly preferred.

### (D: Polyolefin-based resin)

Polyolefin-based resins are resins obtained by the polymerization of one or more α-olefins in the presence of a radical polymerization initiator, a metal oxide- based catalyst, a Ziegler-Natta catalyst, a kaminsky catalyst or the like, and two or more of the aforementioned resins may be used in admixture. The aforementioned α-olefin is a straight branched or cyclic olefin having a polymerizable double bond in the α- position and those having from 2 to 8 carbon atoms are normally selected. Specific examples of the α-olefin include ethylene and propylene. The polyolefin-based resin to which the present invention applies may be copolymerized with other monomers copolymerizable with α-olefin.

Examples of other monomers include α-β unsaturated organic acids or derivatives thereof such as acrylic acid, methacrylic acid, maleic acid, itaconic acid, methyl acrylate, ethyl acrylate, methyl methacrylate, maleic anhydride, arylimide maleate and alkylimide maleate, vinyl esters such as vinyl acetate and vinyl butyrate, aromatic vinyl compounds such as styrene and methyl styrene, and vinyl silanes such as vinyl trimethyl methoxy silane and γ-methacryloyloxy propyl trimethoxy silane, and the polyolefin-based resin may be further copolymerized with a nonconjugated diene such as 1,4- hexadiene, 4-methyl-1, 4-hexadiene, 5-4-methyl-1,4- hexadiene, dicyclopentadiene and ethylidenenorbornene (4-ethylidene-2-nonbornene) in a small amount. Representative examples of the aforementioned polyolefin-based resin include polyethylenes, polypropylenes, ethylene-vinyl acetate copolymers, ethylene-acrylic acid copolymers, etc. The aforementioned polyolefin-based resin is used as a forming material in the form of mixture of two or more polyolefin-based resins but may be mixed with other thermoplastic resins such as PS-based, HIPS-based, HiPS-based, AS-based, ABS-based, AbS-based and PPE(including modified PPe)-based resins.

### (Polymer blend, polymer alloy)

The aforementioned thermoplastic resins may be used in admixture of two or more thereof to give a polymer blend or polymer alloy. The aforementioned polymer blend or polymer alloy is produced by screw kneading using, e.g., extruder. Further, the aforementioned moldable thermoplastic resin may comprise rubbers such as the aforementioned diene-based rubbery polymers, olefin-based rubbery polymers, acryl-based rubbery polymers, e.g., NR, BR, SBR, STR, IR, CR, CBR, IBR, IBBR, IIR, acrylic rubber, polysulfide rubbers, urethane rubbers, polyether rubbers, epichlorohydrin rubbers, chlorobutylrubbers, hydrogenated nitrile rubbers and fluorine-based rubbers, vinyl-based resins such as ethylene-vinyl acetate copolymer, acrylic resin, ethylene-ethyl acrylate copolymer and vinyl chloride and other thermoplastic resins such as polynorbornene incorporated therein to have mechanical properties.

These rubbery polymers are subjected to block, random or graft copolymerization with the resin monomers to be compounded therewith to have compatibility as necessary. Taking into account the adhesion of the coating compound, the graft copolymer is preferred, and the graft polymer to be used in the present invention is a graft rubbery polymer having a diene-based rubbery polymer, olefin-based rubbery polymer or acryl-based rubbery polymer as a backbone and a graft chain having compatibility with the thermoplastic resin used as a vehicle for the aforementioned formed product, accessory members, coatingmaterial, printing ink, adhesive, welding rod, etc.

In other words, the rubbery polymer (rubbery material) to be used in the present invention is a graft diene-based rubbery polymer (diene-based rubber graft polymer), graft olefin-based rubbery polymer (olefin- based rubber graft polymer) or graft acryl-based rubbery polymer (acryl-based graft polymer). In particular, the olefin-based rubber graft polymer and acryl-based rubber graft polymer, which are excellent in thermal stability, are preferred.

The various rubber-like (rubbery) materials (polymers) will be described hereinafter.

### (A: Graft diene-based rubbery polymer)

As the diene-based rubbery polymer (diene-based rubber) which is a constituent of the copolymer to be used in the present invention, a polymer or copolymer comprising a conjugated diene as a main component is preferred. Among these constituents, the content of the conjugated diene is preferably 75% by weight or more, particularly 85% by weight or more. In some detail, polybutadienes, styrene-butadiene copolymers, acrylonitrile-butadiene copolymers, butyl acrylate- butadiene copolymers, isoprene rubbers, etc. may be used.

### (B: Graft olefin-based rubbery polymer)

The olefin-based rubbery polymer (olefin-based rubber) to be used in the present invention is a polymer of one or more α-olefins or a copolymer of one or more of the α-olefins with one or more other monomers copolymerizable therewith, particularly a copolymer of ethylene with one or more other α-olefins or a copolymer of ethylene with other monomers copolymerizable therewith, particularly with a nonconjugated diene compound. As the α-olefin to be used as a monomer to be copolymerized with ethylene in the aforementioned ethylene-α-olefin-based copolymer there may be exemplified an α-olefin having from 3 to 12 carbon atoms, and specific examples of such an α-olefin include propylene, butene-1, 4-methylpentene-1, hexene-1, octene-1, etc.

Examples of the nonconjugated diene compound include dicyclopentadiene, tricyclopentadiene, 5-methyl-2,5-norbornadiene, 5-methylene-2-norbornene, 5-vinyl-2-norbornene, 5-ethylidene-2-norbornene, 5-isopropylididene-2-norbornene, 5-isopropenyl-2- norbornene, 5-(1-butenyl)-2-norbornene, 5-(2- propenyl)-2-norbornene, 5-(5-hexenyl)-2-norbornene, 4, 7,8,9-tetrahydro-indene, isopropylidenetetrahydro- indene, cyclooctadiene, vinylcyclohexene, 1,5,9- cyclododecatoluene, 6-methyl-4,7,8,9-tetrahydroindene, 2,2'-dicyclopentenyl, trans-1,2-divinylcyclobutane, 1,4-hexadiene, 2-methyl-1,4- hexadiene, 1,6-octadiene, 1,7-octadiene, 1,8-nonadiene, 1,9-decadiene, 3,6-dimethyl-1,7-octadiene, 4,5- dimethyl-1,7-octadiene, 1,4,7-octatriene, 5-methyl-1, 8-nonadiene, etc.

Preferred among these nonconjugated diene compounds are 5-ethylidene-2-norbornene (ENB) and/or dicyclopentadiene (DCP), more preferably dicyclopentadiene. A resin having a graft olefin-based rubbery polymer comprising 5-ethylidene-2-norbornene and AS or PS in admixture provides a formed product with a good external appearance. Further, the graft olefin-based rubbery polymer is better made of EPDM rather than EPM as a main constituent rubbery polymer to provide a moldable thermoplastic resin with a raised impact strength.

Referring to the ratio of ethylene-α-olefin and nonconjugated diene compound to be optionally incorporated in the graft olefin-based rubbery polymer to be used in the present invention, the molar ratio of ethylene/α-olefin/nonconjugated diene compound is preferably 0.2 to 1.0/0.2 to 0.8/0 to 0.2, more preferably 0.5 to 0.9/0.25 to 0.75/0 to 0.1 and the molar ratio of ethylene/propylene is 60/40 or more, preferably 65/35 or more, that is, an ethylene-rich ethylene-propylene copolymer rubber (EPM) or ethylene-propylene- nonconjugated diene compound terpolymer rubber (EPDM) is preferably used from the standpoint of the regeneratability of the mechanical properties (impact resistance, etc.) of the formed resin product obtained (hereinafter referred to as "regeneratability").

Further, the Mooney viscosity (ML1+4, 100°C) of the ethylene-α-olefin-based copolymer to be used in the present invention is preferably from 5 to 150, more preferably from 10 to 120, optimally from 20 to 80 from the standpoint of regeneratability (thermal stability, i.e., recyclability).

Representative examples of the aforementioned olefin-based rubbery polymer include ethylene-propylene copolymer rubber (EPM), ethylene-propylene- nonconjugated diene compound terpolymer rubber (EPDM), ethylene-butene copolymer (EBM), and ethylene-butene-nonconjugated diene compound terpolymer (EBDM). The nonconjugated diene compound to be incorporated in the EBDM is the same as used in the aforementioned EPDM.

### (C: Graft acryl-based rubbery polymer)

The acryl-based rubbery polymer (acryl-based rubber) to be used in the present invention is an acrylate homopolymer having an alkyl group having preferably from 2 to 8 carbon atoms such as ethyl acrylate, n-butyl acrylate and 2-ethylhexyl acrylate, copolymer of two or more of the aforementioned acrylates or copolymer of one or more of the aforementioned acrylates with butadiene, the same nonconjugated diene compound as used in EPDM or one or more of other monomers such as acrylonitrile, methyl methacrylate, vinyl acetate, styrene, ethylene and propylene, a functional monomer such as acrylic acid, methacrylic acid, β-hydroxyethyl methacrylate, acrylamide and dimethylaminoethyl methacrylate or polymerizable silane coupling agent such as γ-methacryloxypropyltrimethoxysilane, vinyl triacetoxysilane, p-trimethoxysilylstyrene, p-triethoxysilylstyrene, p-trimethoxysilyl-α-methyl styrene, p-triethoxysilyl-α-methylstyrene, γ-acryloxy propyltrimethoxysilane, vinyltrimethoxysilane, N-β-(N-vinylbenzylaminoethyl-γ-aminopropyl)trimethoxy silane hydrochloride.

Examples of the general-purpose acryl-based rubbery polymer include polyethyl acrylates, poly-n- butyl acrylates, n-butyl acrylate-acrylonitrile copolymers, n-butyl acrylate-butadiene copolymers, n-butyl acrylate-ethylene copolymers, n-butyl acrylate-γ-methacryloxypropyl trimethoxysilane copolymers, n-butylacrylate- vinyltrimethoxysilane copolymers, etc. which are obtained by the copolymerization of some of the aforementioned functional monomers, and preferred examples of the acryl-based rubber include n-butyl acrylate-butadiene copolymers having a molar n-butyl acrylate/butadiene ratio of 30/70 or more. The aforementioned acryl-based rubbery polymers are normally produced by suspension polymerization, emulsion polymerization or the like. The average particle diameter of these diene-based, olefin-based and acryl-based rubbery polymer latexes needs to be from 0.1 to 50 µm and is particularly preferably from 0.15 to 15 µm. Herein, if the average particle diameter of the diene-based rubbery polymer latex falls below 0.1 µm, the resulting resin composition exhibits a deteriorated impact resistance, and on the contrary, if the average particle diameter of the diene-based rubbery polymer latex exceeds 50 µm, the surface gloss thereof is deteriorated, making it impossible to obtain a satisfactory resin composition.

Further, the gel content in the diene-based, olefin-based and acryl-based rubbery polymer latexes is 40% by weight or more, preferably 60% by weight or more taking into account the surface gloss and impact resistance of the composition thus obtained. The term "gel content" as used herein is meant to indicate the weight fraction of toluene insolubles in the rubber latex which has been solidified and dried.

As a process for the production of these rubbery polymer latexes there may be used an ordinary emulsion polymerization process. The predetermination of the average particle diameter, particle diameter distribution and gel content to the desired range is made possible by closely controlling the amount of polymerization water, emulsifier and chain transfer agent to be used during polymerization, the polymerization temperature, the agitation rate, the polymerization time, etc.

### (Graft copolymerization)

Examples of the aromatic vinyl-based monomer to be graft-polymerized (copolymerized) with the rubbery polymer for the purpose of rendering the resin to be compounded compatible, if is PS, include styrene, α-alkylmonovinylidene aromatic monomers (e.g., α-methyl styrene, α-ethylstyrene, α-methylvinyltoluene, α-methyldialkylstyrene), cyclic substituted alkylstyrenes (e.g., o, m, or p-vinyltoluene, o-ethyl styrene, p-ethylstyrene, 2, 4-dimethylstyrene, p-tertiary butylstyrene), cyclic substituted halostyrenes (e.g., o-chlorostyrene, p-chlorostyrene, o-bromostyrene, 2,4-dichlorostyrene), cyclic alkyls, cyclic halo-substituted styrenes (e.g., 2-chloro-4- methylstyrene, 2,6-dichlorostyrene), styrene-based monomers such as vinyl naphthalene and vinyl anthracene, etc., and styrene is particularly preferred. These aromatic vinyl-based monomers may be used singly or in combination of two or more thereof. Further, the alkylsubstituted group normally has from 1 to 4 carbon atoms and contains both straight and branched alkyl groups. Further, if the resin to be compounded is AS, styrene- based monomers and even cyanated vinyl-based monomers are grafted. Examples of the cyanated vinyl-based monomers include acrylonitrile, methacrylonitrile, ethacrylonitrile, fumaronitrile, etc., and acrylonitrile is particularly preferred. These monomers may be used singly or in combination of two or more thereof.

Besides the aforementioned styrene-based monomers and nitrile-based monomers, other monomers may be copolymerized. The aforementioned other monomers (third components) are specifically limited so far as they are monomers copolymerizable with the aforementioned styrene-based monomers and nitrile- based monomers, but ordinary examples thereof include (meth) acrylates such as methyl (meth)acrylate and ethyl (meth)acrylate, maleimides such as N-phenylmaleimide, maleimide, N-methyl maleimide, N-ethyl maleimide, (p- bromophenyl)maleimide methacrylate and cyclohexyl maleimide, maleic anhydride, unsaturated nitrile compounds such as methacrylonitrile, etc.

The (meth)acrylates are preferably C₁-C₄ alkylesters, particularly methacrylates. Herein, the graft polymer (graft rubbery polymer) of the present invention is obtained by the graft polymerization of from 65 to 85 parts by weight, preferably from 70 to 80 parts by weight of rubbery polymer with from 15 to 35 parts by weight, preferably from 20 to 30 parts by weight of monomer mixture. If the amount of the rubbery polymer exceeds 85 parts by weight, the relative reduction of the amount of the monomers with which the rubbery polymer is grafted makes it impossible to provide the thermoplastic resin with good physical properties. The ratio of the aromatic vinyl-based monomer in the total amount of the rubbery polymers to be grafted is from 50 to 99% by weight, preferably from 60 to 90% by weight, more preferably from 70 to 80% by weight, and if it falls below 50% by weight, the dispersion of the rubbery polymer in the thermoplastic resin is deteriorated to disadvantage. In the case where the resin to be compounded is AS, the ratio of the cyanated vinyl-based monomer is from 1 to 50% by weight, preferably from 10 to 40% by weight, more preferably from 20 to 30% by weight. Further, when other vinyl-based monomers copolymerizable with them are used in an amount of 50% by weight or less, the object of the present invention can be accomplished.

The graft polymerization is not specifically limited in its production process, and in order to graft-polymerize a rubbery polymer obtained by a generally known solution polymerization, emulsion polymerization, suspension polymerization, bulk polymerization or the like with the aforementioned monomers, a polymerization method involving the polymerization of the aforementioned monomers in the presence of the aforementioned olefin-based rubbery polymer with an oil-soluble or water-soluble initiator and/or under the irradiation with a high energy ray such as ultraviolet ray and electron ray is used, and as the polymerization process there is used an ordinary process such as bulk polymerization, suspension polymerization, solution polymerization and emulsion polymerization.

The graft rubbery polymer obtained by graft polymerization comprises as a main component a graft polymer in a narrow sense having a rubbery polymer as a backbone and the polymer chain of the aforementioned monomers as a branch and optionally comprises the graft rubbery polymer microblended with a rubbery polymer and/or a polymer composed of the aforementioned monomers.

As the method of adding components such as monomer mixture, emulsifier, polymerization initiator and chain transfer agent during polymerization there may be used various methods. In some detail, there may be exemplified a method which comprises adding the total amount of these components in the initial stage of polymerization, a method which comprises adding a part of these components in the initial stage of polymerization, and then adding the rest of the components, a method which comprises continuously adding the total amount of these components, a method which comprises adding these components batchwise in two or more portions, etc.

The kind of the emulsifier, polymerization initiator and chain transfer agent to be used is not specifically limited, and reagents for use in ordinary emulsion polymerization may be used. Representative examples of the emulsifier include potassium rosinate, potassium stearate, potassium oleate, etc., representative examples of the polymerization initiator include combination of organic hydroperoxide and saccharide-containing pyrohphosphoric acid-ferrous sulfate, persulfate, etc., and representative examples of the chain transfer agent include alkylthiol compounds.

The graft rubbery polymer obtained by emulsion polymerization is a composition comprising a graft rubber component obtained by the graft polymerization of rubbery polymer with aromatic vinyl-based monomer, cyanated vinyl-based monomer and other vinyl-based monomers copolymerizable therewith and a non-grafted polymer component left ungrafted with the rubbery polymer. Herein, the percent graftization of the graft rubber component (weight ratio of polymer component to be grafted on rubbery polymer) is 10% or more, preferably 15% or more. When the percent graftization falls within this range, the compatibility of the aforementioned graft rubbery polymer with the thermoplastic resin and the effect of enhancing the regeneratability of the graft rubbery polymer with respect to the thermoplastic resin, i.e., effect of preventing the drop of impact resistance during cycle are well balanced. When the percent graftization falls below 10%, the impact resistance of the resin composition and the surface external appearance of the formed product are deteriorated to disadvantage. The weight ratio of the non-grafted polymer components in the graft polymer is 5% by weight or more, preferably 8% by weight or more. When the amount of the non-grafter polymer component falls below 5% by weight, the formed product of resin composition has agglomerates appearing on the surface thereof and thus exhibits a drastically deteriorated external appearance and deteriorated physical properties such as impact resistance to disadvantage. The intrinsic viscosity of the non-grafted polymer component in methyl ethyl ketone at 30°C is 0.3 dl/g or less, preferably from 0.05 to 0.28 dl/g, more preferably from 0.1 to 0.26 dl/g. When the intrinsic viscosity exceeds 0.3 dl/g, the rubber particles are not uniformly dispersed in the matrix, causing the deterioration of the surface external appearance to disadvantage. Herein, since the polymerization degree of the polymer components to be grafted with the non-grafted polymer component are normally thought to be substantially the same, when the polymer component grafted has a long chain, is entangled with the polymer component grafted with other rubbery polymers to prevent the uniform dispersion of grafter rubber particles, causing the deterioration of impact resistance and surface external appearance. The percent graftization and the intrinsic viscosity of the non-grafted polymer can be controlled by adjusting the ratio of rubbery polymer and monomer mixture, the kind and amount of polymerization initiator, the kind and amount of chain transfer agent and the kind and amount of emulsifier.

The graft rubbery polymer comprising rubbery polymer suitable for various thermoplastic resins will be described hereinafter.

### (1) Graft rubbery polymer for styrene-based resin

For the styrene-based resin, particularly PS (or HIPS and HiPS), as styrene and/or monomer analogous to styrene there may be used a graft rubbery polymer (styrene graft rubbery polymer which is a graft copolymer with styrene containing a diene-based, olefin-based or acryl-based rubbery polymer and/or monomer analogous to styrene) obtained by the graft polymerization of one or more of other styrene-based monomers exemplified in the foregoing paragraph (A; Styrene-based resin).

The styrene graft rubbery polymer has a polymer chain of the aforementioned styrene-based resin, particularly styrene-based monomer having substantially the same solubility parameter as PS, as a branch and thus exhibits a good compatibility with PS.

For the styrene-based resin, particularly AS (or ABS and AbS), a graft rubbery polymer obtained by the graft polymerization of one or more of styrene (styrenated vinyl) and/or other styrene-based monomers with one or more of acrylonitrile (cyanated vinyl) and/or other nitrile-based monomers (styrene nitrile graft rubbery polymer which is a graft copolymer of styrene containing diene-based, olefin-based or acryl-based rubbery polymer and/or other styrene-based monomers or monomers analogous to styrene with acrylonitrile and/or other nitrile-based monomers) is used.

The rubbery polymer may be graft-copolymerized with other monomers copolymerizable with the aforementioned monomers beside the aforementioned monomers. Such monomers are exemplified in the paragraph (A: styrene-based resin).

The aforementioned styrene nitrile graft olefin- based graft polymer has a styrene-nitrile copolymer chain having substantially the same solubility parameter as the aforementioned styrene-based resin, particularly AS (or ABS and AbS), as a branch and thus exhibits a good compatibility with AS (or ABS or AbS).

### (2) Graft rubbery polymer for PPE-based resin

PPE comprises constituent units having a phenyl group as previously mentioned and as the graft rubbery polymer there is preferably selected a styrene graft rubbery polymer. Since the graft rubbery polymer has a styrene polymer chain having a solubility parameter close to that of PPE as a branch and thus exhibits a good compatibility with PPE-based resin, the graft rubbery polymer can be mixed stably with PPE-based resin without causing separation to provide itself with the physical properties of the PPE-based resin.

### (3) Rubbery polymer for olefin-based resin

For the polyolefin-based resin such as polyethylene and polypropylene, the olefin-based rubbery polymer may be used as it is because it is obtained by the copolymerization of monomers which are the same as or analogous to polyolefin-based resin and thus has substantially the same solubility parameter as the aforementioned polyolefin-based resin, particularly PP and hence a good compatibility.

Referring to the ratio of ethylene-α-olefin as rubbery polymer for olefin-based resin and nonconjugated diene compound which is optionally used, the molar ratio of ethylene/α-olefin/nonconjugated diene compound is preferably from 0.2 to 1.0/0.2 to 0.8/0 to 0.2, more preferably 0.5 to 0.9/0.25 to 0.75/0 to 0.1, and the molar ratio of ethylene/propylene is from 60/40 or more, preferably 65/35 or more, that is, ethylene-rich EP or EPDM is preferably used from the standpoint of the regeneratability of the mechanical properties (impact resistance, etc.) of the formed resin product thus obtained (hereinafter referred to as "regeneratability").

Further, the Mooney viscosity (ML1+4, 100°C) of the ethylene-α-olefin-based copolymer to be used in the present invention is preferably from 5 to 150, more preferably from 10 to 120, optimally from 20 to 80 from the standpoint of regeneratability.

Further, in order to enhance the impact resistance of the aforementioned thermoplastic resin, a thermoplastic elastomer (TPE) may be added. The thermoplastic resin acts as vulcanized rubber but becomes thermoplastic and thermally moldable at ordinary temperature and comprises a hard segment and a soft segment. Examples of the TPE include urethane-based elastomers, styrene-based elastomers, vinyl-based elastomers, ester-based elastomers, etc.

### [Formed (molded) product]

The formed product of the present invention is produced by subjecting the aforementioned thermoplastic resin as a material to various forming methods such as injection molding, blow molding, vacuum forming, pressure forming, press molding and extrusion and may have various shapes such as container, box, tray and sheet.

### [Accessory members]

The accessory members are produced by subjecting a thermoplastic resin having compatibility with the thermoplastic resin of the aforementioned formed product to the same forming method as the formed product. Examples of the accessory members include grip, leg, seal, label, etc. bonded to formed product, flame, etc.

The term "thermoplastic resin having compatibility with the thermoplastic resin of the formed product" as used herein is meant to indicate a thermoplastic resin which undergoes no phase separation from the thermoplastic resin of the formed product even if subjected to mixing/fusion under heating.

As the thermoplastic resin to be used in the accessory members there is normally used a thermoplastic resin exemplified as thermoplastic resin of the aforementioned formed product. For example, if the thermoplastic resin of the aforementioned formed product is HIPS, HiPS or PS, as the thermoplastic resin of the accessory members there is used HIPS, HiPS, PS or the like having compatibility with the thermoplastic resin of the formed product.

In the case where the thermoplastic resin of the formed product is ABS, AbS or AS, as the thermoplastic resin of the accessory members there is used ABS, AbS, AS, ACS, ASiS or the like having compatibility with the thermoplastic resin of the formed product.

In the case where the thermoplastic resin of the formed product is PPE (or modified PPE), as the thermoplastic resin of the accessory members there is used PPE, modified PPE, PS, HIPS, HiPS or the like having compatibility with the thermoplastic resin of the formed product.

In the case where the thermoplastic resin of the formed product is a mixture of PC and ABS or AbS (including polymer alloy and polymer blend; hereinafter referred to as "PC/ABS mixture, etc."), as the thermoplastic resin of the accessory members there is used PC/ABS or AbS mixture, AS, AbS, ACS, ASiS or the like having compatibility with the thermoplastic resin of the formed product.

In the case where the thermoplastic resin of the formed product is PP, as the thermoplastic resin of the accessory members there is used PP, halogenated PP such as chlorinated PP or the like having compatibility with the thermoplastic resin of the formed product.

### [Coating material]

The coating material to be used in the present invention is adapted to be spread over the surface of the formed product, such as coating compound and ink and comprises a thermoplastic resin having compatibility with the thermoplastic resin of the formed product as a vehicle. In other words, the aforementioned thermoplastic resin as vehicle is a resin which undergoes no phase separation when melted and mixed with the thermoplastic resin of the formed product. Examples of such a resin include styrene-based resins, styrene-modified acrylic resins, etc. if the formed product is made of styrene-based resin, PPE resin or PC resin or halogenated olefin resins, etc. if the formed product is made of polyolefin resin. Examples of the form of the coating material include solvent type, emulsion type, suspension type, water-soluble type, and powder type. The aforementioned thermoplastic resin as vehicle comprises cellulose derivatives incorporated therein to improve spreadability, pigment dispersibility, dryability, etc., and examples of such cellulose derivatives include methyl cellulose, ethyl cellulose, hydroxy cellulose, hydroxypropyl methyl cellulose, hydroxymethyl ethyl cellulose, cellulose acetate, benzyl cellulose, nitrocellulose, cellulose acetate butyrate, etc. The viscosity of the cellulose acetate butyrate is preferably from 0. 01 to 20 seconds. The acetyl group content in the cellulose acetate butyrate is preferably from 0 to 15. 0% . The butyl group content in the cellulose acetate butyrate is preferably from 30.0 to 55.0%.

The cellulose acetate is cellulose diacetate and its oxidation degree is from 50 to 60%, preferably from 54 to 56%. The ethoxy group content in the ethyl cellulose is from 45 to 50%. Further, the methoxy group content in the methyl cellulose is preferably from 19 to 31.5%. The hydroxypropoxy group content in the hydroxypropylmethyl cellulose is preferably from 4 to 12%. The hydroxyethylmethyl cellulose preferably has a hydroxyethoxy group content of from 4 to 12%. The viscosity of a 2 wt-% aqueous solution of the hydroxyethyl cellulose is from 20 to 100, 000 cps (mPa·s). The nitrogen content in nitrocellulose is preferably 3% by weight or more.

The aforementioned coating material may be a non-yellowing clear lacquer but may comprise pigments such as titanium white, chromium yellow, red oxide, cobalt blue and carbon black and dyes such as dispersed dye, cationic dye, basic dye, acidic dye, metal complex dye, reactive dye, direct dye, sulfide dye, vat dye, indigo dye and composite dye incorporated therein if it is intended for coloration. The aforementioned coating material may further comprise plasticizers such as dimethyl phthalate, dibutyl phthalate and dioctyl phthalate, age inhibitors, ultraviolet absorbers, pigment or dye dispersants, etc. incorporated therein.

In particular, as the vehicle for the coating material to be used in styrene-based resin, PPE-based resin or PC resin there is preferably used a styrene- modified acrylic resin.

The aforementioned styrene-modified acrylic resin is a copolymer comprising styrene and acryl ester. As the acryl ester there can be exemplified acrylates such as methyl acrylate, ethyl acrylate, n- propyl acrylate, iso-propyl acrylate, n-butyl acrylate, iso-butyl acrylate, t-butyl acrylate, 2-ethylhexyl acrylate, cyclohexyl acrylate and tetrehydrofurfuryl acrylate, and methacrylates such as methyl methacrylate, ethyl methacrylate, n-propyl methacrylate, iso-propyl methacrylate, n-butyl methacrylate, iso-butyl methacrylate, 2-ethylhexyl methacrylate, cyclohexyl methacrylate, tetrahydrofurfuryl methacrylate, stearyl methacrylate and lauryl methacrylate may be used as well.

The aforementioned styrene-modified acrylic resin may be copolymerized with monomers such as vinyl ethers e.g., methyl vinyl ether, ethyl vinyl ether, n-propyl vinyl ether, n-butyl vinyl ether, iso-butyl vinyl ether, nitrile-based monomer, e.g., acrylonitrile, methacrylonitrile, aliphatic vinyls, e.g., vinyl propionate, olefin, e.g., ethylene, propylene, diene, e.g., isoprene, chloroprene, butadiene, α,β-unsaturated carboxylic acid, e.g., acrylic acid, methacrylic acid, itaconic acid, maleic acid, crotonic acid, atropic acid, citraconic acid, hydroxyl group-containing monomer, e.g., 2-hydroxylethyl methacrylate, 2-hydroxyethyl acrylate, 2-hydroxypropyl methacrylate, 2-hydroxypropyl acrylate, allyl alcohol, amide, e.g., acrylamide, methacrylamide, diacetone acrylamide, amino group-containing monomer, e.g., dimethylaminopropyl acrylate, dimethylaminoethyl methacrylate, dimethylaminopropyl acrylate, epoxy group-containing monomer, e.g., glycidyl acrylate, glycidyl methacrylate, glycidiylallyl ether, and hydrolyzable silyl group- containing vinyl monomer, e.g., γ-methacryloxypropyl trimethoxysilane, vinyl acetoxysilane, p-trimethoxy silyl styrene, p-trimethoxysilyl-α-methylstyrene, p-triethoxysilyl-α-methylstyrene, γ-acryloxypropyl trimethoxysilane, vinyl trimethoxysilane, N-β(N-vinyl benzylaminoethyl-γ-aminopropyl)trimethoxysilane hydrochloride so far as the compatibility with the thermoplastic resin of the formed product cannot be impaired. The aforementioned monomers may be used singly or in combination of two or more thereof.

The coating compound, etc. made of the styrene-modified acrylic resin can be used also in the coating of any formed product made of the aforementioned styrene-based resin (HIPS, HiPS, PS, ABS, AbS, AS), PPE (modified PPE), PC/ABS, AbS, HIPS or HiPS mixture or the like and has a good adhesion, weathering resistance and workability and thus is a particularly useful coating compound or the like.

As a method of coating the aforementioned formed product and accessory formed products with the aforementioned coating compound or the like, any known coating method can be used, and air spray coating is normally used.

The formed product coated with a coating compound or ink which is the aforementioned coating material by coating or printing doesn't need to have the coat or the like separated therefrom when recycled because the resin of the aforementioned coating material is made of a resin having compatibility with the resin of the formed product. Accordingly, the formed resin product coated with the coating material of the present invention is a formed resin product having an excellent recyclability.

### (Coloring agent)

A material incorporated in a coating compound for the purpose of decorative coloring is called coloring agent, and as such there is normally used a pigment. The term "pigment" as used herein is meant to indicate a powder having a color insoluble in water, solvent or the like or a powder having a color soluble in water. Examples of these pigments will be given below.

Concerning inorganic pigments, examples of white pigments include titanium oxide, zinc oxide, white lead, lithopone, barytes, precipitated barium sulfate, calcium carbonate, gypsum, precipitated silica, etc. and examples of black pigments include carbon black, lamp black, titanium black, synthetic black iron oxide, waste toner from copying machine, etc. Examples of gray pigments include zinc powder, lead suboxide, antimony white, monobasic lead sulfate, white lead, titanium white, etc., and examples of black pigments include carbon black, lamp black, bone black, graphite, black iron oxide, waster toner, etc. Examples of red pigments include cadmium red, cadmium mercury red, silver red, red oxide, lake red 4R, carmine FB, dinitroaniline orange, pyrazolone orange, pyrazolone red, perinone orange, permanent red 2B, lake red R, BON maroon light, bordeaux 10B, BON maroon medium, thioindigo bordeaux, BON maroon L, perylene vermillion, perylene scarlet, perylene maroon, benzimidazolone orange, etc. Examples of brown pigments include amber, brown iron oxide, cadmium yellow, etc. Examples of yellow pigments include zinc yellow, yellow soil, ocher/siena, yellow iron oxide, synthetic ocher, lead yellow, titanium yellow, etc. Examples of green pigments include chromium oxide, cobalt green, chromium green, lead yellow, yellow iron oxide, titanium yellow, yellow soil, antimony yellow, barium yellow, monoazo pigment, disazo pigment, condensed azo pigment, isoindolinone pigment, threne-based pigment, etc. Examples of green pigments include chromium green, cobalt green, chromium oxide, cyanine green, bromated green, chromium green, etc. Examples of blue pigments include Prussian blue, Milori blue/iron blue, cobalt blue, Prussian blue, cyanine blue, metal-free cyanine blue, indanethrene blue, cobalt blue, etc. Examples of violet pigments include cobalt violet, manganese violet, quinacridone violet, quinacridone red, dioxazine violet, etc. Examples of rust-preventive pigments include zinc powder, lead suboxide, red lead oxide, zinc chromate, calcium plumbate, strontium chromate, lead cyanamide, basic lead chromate, basic lead sulfate, MIO, etc. Further, the metallic powder pigment is intended to provide metallic tissue, and examples of such metallic powder pigment include aluminum powder (aluminum flake), bronze powder (bronze flake), mica, shell powder, pearl powder, fish scales, etc. Examples of extender pigments include calcium carbonate, clay, kaolin, diatomaceous earth, silica white, bentonite, talc powder, precipitated magnesium carbonate, barium sulfate, barium carbonate, etc. Examples of other pigments include cupric oxide, fluorescent pigment, glass beads, litharge, mica-based titanium foil, mica powder, etc.

Examples of dyes include direct dye, acidic dye, basic dye, metal-containing complex dye, oil-soluble dye, etc. As organic pigments there are used azo pigments, nitroso pigments, nitro pigments, basic dye-based lakes, mordant dye-based lakes and vat dye-based pigments as necessary.

### [Resin coat]

In the regenerating method which comprises grinding a formed product made of a forming resin having compatibility with the coating resin with the coat left attached thereto, and then pelletizing the material, the whole or part of the pigment which is being spread moves into the forming resin in the stage of heat melting (coat is heated and melted) during regeneration in the case where the coating resin is a thermoplastic resin. Consequently, the amount of noncompatible materials {pigment/dye is poor in compatibility with the forming resin} in the forming resin increases, resulting in the deterioration of the physical properties of the aforementioned forming resin after regeneration due to the effect of the pigment in the coat layer.

By coating the forming resin with the aforementioned pigment using a known method described in JP-A-64-40566, JP-A-51-11818, JP-B-1-49746, etc. for the purpose of providing bond on the interface/border of the forming resin with the pigment {providing so-called compatibility} to solve these problems, the deterioration of physical properties of the forming resin to be regenerated can be eliminated. In order that the resin coat might have compatibility with the forming resin, it is required that the amount of the resin coat be 0.5% by weight or more. Further, in the case where an aluminum flake pigment is used for aqueous coating compounds such as emulsion type coating compound, there arises a problem of corrosion of aluminum flake, but this problem can be solved by resin coating.

The concept of resin coating will be described below with reference to aluminum flake.

For the purpose of providing (1) an aluminum flake with compatibility with (2) a coating resin, a forming resin, preferably forming resin to be coated, one or more of monomers which are the same or analogous to the forming resin are polymerized to cause growth and adsorption of resin.

This step is executed once or two or more times.

As the coating resin there may be used either a thermoplastic or thermosetting resin so far as it exhibits compatibility with the forming resin and/or coating resin, but the thermosetting resin is preferred in the light of the requirements that the coating resin undergo no swelling with or dissolution in the solvent in the coating compound or no fusion in the stage of heating/melting during regeneration because it is incorporated in the coating compound.

In the case of thermoplastic resin, there are requirements that it undergo no swelling with or dissolution in the solvent or the melting temperature of the coating resin be higher than the heating/melting temperature during regeneration, that is, the coating resin on the surface of the pigment undergo no melting melt kneading under heating during regeneration.

If the forming resin is (A: styrene-based resin), a thermoplastic styrene-modified acrylic resin or acrylic resin is suitable. A styrene-modified urethane resin, too, may be used, but it is poor in compatibility as compared with the aforementioned thermoplastic styrene-modified acrylic resin or acrylic resin.

### (Solvent)

Concerning the solvent to be used in the coating compound, examples of hydrocarbon-based solvents include normal hexane, lower aromatic group-containing mineral spirit, toluene, xylene, terpene, methyl cyclohexane, ethyl cyclohexane, etc., examples of alcohol-based solvents include methanol, ethanol, isopropanol, normal butanol, isobutanol, secondary butanol, tertiary butanol, methyl isobutyl carbinol, etc., examples of ether alcohol-based and ether-based solvents include methyl cellosolve, cellosolve, butyl cellosolve, tertiary butyl cellosolve, 3-methyl-3- methoxy butanol, methyl carbitol, carbitol, butyl carbitol, etc., examples of ester-based and ether ester-based solvents include methyl acetate, ethyl acetate, isopropyl acetate, butyl acetate, isobutyl acetate, amyl acetate, methyl cellosolve acetate, cellosolve acetate, butyl cellosolve acetate, methoxy butyl acetate, carbitol acetate, propylene glycol monomethyl ether, etc., and examples of ketone-based solvents include acetone, methyl ethyl ketone, methyl isobutyl ketone, cyclohexanone, diacetone alcohol, diisobutyl ketone, isophorone, etc.

Besides these solvents, there are water, dimethyl formamide, etc., and even inert gases such as supercritical fluid, carbon dioxide, He, Ne, Ar and nitrogen gas, combustible gases such as LPG, methane, ethane, propane, butane and pentane, liquefied gases obtained by liquefying air, oxygen, chlorine, etc.

### (Additives)

Examples of the additives which can be used in the coating compound include plasticizers, anti-foaming agents, segregation inhibitors, color unevenness inhibitors, lifting inhibitors, surface active agents, anti-skinning agents, thickening agents, precipitation inhibitors, sedimentation inhibitors, flow inhibitors, sag inhibitors, preservatives, mild-proofing agents, ultraviolet stabilizers, fire retardants, stain inhibitors, matting agents, vinyl chloride resin stabilizers, germicides, etc.

### [Example 1]

### (Formulation of coating compound)

10% by weight of an aluminum pigment paste (paste-like pigment obtained adding a small amount of a solvent or resin to the aforementioned aluminum flake; widely used in the production of coating compound), 40% by weight of an acrylic resin varnish (*1), 19% by weight of CAB resin varnish (*2), 2% by weight of a plasticizer (*3) and 29% by weight of a thinner (solvent) (*4) were mixed to prepare coating compound.

Herein, as aluminum pigment pastes there were used those comprising a resin coat incorporated therein in an amount of 2.5% by weight (AluPaste (trade name) FZC3080/produced by TOYO ALUMINIUM K.K.), 5.6% by weight (AluPaste (trade name) FZC6370/produced by TOYO ALUMINIUM K.K.), 12.4% by weight (AluPaste (trade name) FZH5660/produced by TOYO ALUMINIUM K.K.), 17.1% by weight (AluPaste (trade name) FZ-U75C/produced by TOYO ALUMINIUM K.K.) and 0% by weight (AluPaste (trade name) 1109M/produced by TOYO ALUMINIUM K.K. ; AluPaste (trade name) 7675NS/produced by TOYO ALUMINIUM K.K.), respectively.

As the coating resin there was used an acrylic resin having compatibility with HiPS, and as the varnish (*1) there was used a Type Acrydic (trade name) A-157 normally-temperature drying acrylic resin varnish (nonvolatile content: 45%) produced by DAINIPPON INK AND CHEMICALS, INCORPORATED.

As CAB resin varnish (*2) there was used a Type CAB-381-0.5 cellulose acetate butyrate resin (nonvolatile content: 20%) produced by Eastman Chemical Inc., and as the plasticizer (*3) there was used adipic acid ester produced by DAINIPPON INK AND CHEMICALS, INCORPORATED.

Further, the thinner (*4) comprises 35% by weight of ethyl acetate, 20% by weight of isopropyl alcohol, 15% by weight of isobutanol, 10% by weight of butyl acetate and 20% by weight of butyl cellosolve.

### [Coating]

The aforementioned coating compound the viscosity of which had been adjusted to 11 seconds (FC#4/20°C) with the aforementioned thinner was air-sprayed onto one surface of a formed product 1 shown in Fig. 1 obtained by forming an ABS resin (GARADE-150 TYPE-NP (natural color), produced by Techno Polymer Co., Ltd.) to a thickness of 10 µm. Thereafter, the coated material was dried in a 50°C drying furnace for 20 minutes to obtain a coated formed product 1 shown in Fig. 1. The reference numeral 2 in Fig. 1 is a rib.

### [Regeneration]

The coated formed product 1 was ground and pelletized to obtain a regenerated pelletized ABS resin. The regenerated pelletized ABS thus obtained was then formed to obtain a test specimen (formed product) to be evaluated for physical properties, and these test specimens were then measured and compared for Izod impact strength to confirm the effectiveness of the presence of resin coat on the pigment (Table 1).

**(Table 1)**

| AluPaste | None | FZC6340 | FZC3080 | FZC6370 | FZH5660 | FZ-U75C | 1109M | 7675NS |
|---|---|---|---|---|---|---|---|---|
| Amount of resin coat (wt-%) | - | 1 | 2.5 | 5.6 | 12.4 | 17.1 | 0 | 0 |
| Izod impact strength | 21.5 | 17 | 17.8 | 19.9 | 20.5 | 20.5 | 16.4 | 16.5 |
| Orientability to recycling | - | Δ | Δ | ○ | ○ | ○ | X | X |

The amount of the resin coat on the aluminum paste is preferably 5% by weight or more from the standpoint of recyclability.

### [Example 2]

Substantially the same results as that of the aforementioned ABS were shown also when HIPS {Stylon 492 (trade name)} was used instead of ABS in the aforementioned Example 1 (Table 2).

**(Table 2)**

| AluPaste | None | FZC6340 | FZC3080 | FZC6370 | FZH5660 FZ-U75C | | 1109M | 7675NS |
|---|---|---|---|---|---|---|---|---|
| Amount of resin coat (wt-%) | - | 1 | 2.5 | 5.6 | 12.4 | 17.1 | 0 | 0 |
| Izod impact strength | 6.9 | 5.2 | 5.8 | 6.4 | 6.7 | 6.9 | 5.1 | 4.9 |
| Orientability to recycling | - | Δ | Δ | ○ | ○ | ○ | X | X |

### [Example 3]

Example 3 involved the use of modified PPE {Xyron100Z (trade name)} and showed substantially the same results as that of the aforementioned ABS (Table 3).

**(Table 3)**

| AluPaste | None | FZC6340 | FZC3080 | FZC6370 | FZH5660 | FZ-U75C | 1109M | 7675NS |
|---|---|---|---|---|---|---|---|---|
| Amount of resin coat (wt-%) | - | 1 | 2.5 | 5.6 | 12.4 | 17.1 | 0 | 0 |
| Izod impact strength | 14.3 | 11.3 | 11.8 | 13.5 | 14.1 | 1.36 | 10.6 | 11.3 |
| Orientability to recycling | - | Δ | Δ | ○ | ○ | ○ | X | Δ |

### [Example 4]

Example 4 involved the use of AbS {AES {Unibright 700A (trade name)} and showed substantially the same results as that of the aforementioned ABS (Table 4).

**(Table 4)**

| AluPaste | None | FZC6340 | FZC3080 | FZC6370 | FZH5660 | FZ-U75C | 1109M | 7675NS |
|---|---|---|---|---|---|---|---|---|
| Amount of resin coat (wt-%) | - | 1 | 2.5 | 5.6 | 12.4 | 17.1 | 0 | 0 |
| Izod impact strength | 52.1 | 41.3 | 43.2 | 49.0 | 49.8 | 49.7 | 39.2 | 40.9 |
| Orientability to recycling | - | Δ | Δ | ○ | ○ | ○ | X | Δ |

### [Example 5]

Substantially the same results as that of the aforementioned ABS of the aforementioned Example 1 were shown also when HiPS obtained by mixing PS with 25 parts by weight of a copolymer of acrylic acid butyl of styrene graft having compatibility with PS and butadiene was used instead of ABS of the aforementioned Example 1 (Table 5).

**(Table 5)**

| AluPaste | None | FZC6340 | FZC3080 | FZC6370 | FZH5660 | FZ-U75C | 1109M | 7675NS |
|---|---|---|---|---|---|---|---|---|
| Amount of resin coat (wt-%) | - | 1 | 2.5 | 5.6 | 12.4 | 17.1 | 0 | 0 |
| Izod impact strength | 6.9 | 5.5 | 5.8 | 6.5 | 6.6 | 6.6 | 5.3 | 5.2 |
| Orientability to recycling | - | Δ | Δ | ○ | ○ | ○ | X | X |

Further, the present embodiment was confirmed on the coating compound, but it can be presumed that the present embodiment can be fairly applied to a printing ink having a formulation similar to that of the coating compound.

The aforementioned embodiments and examples have been exemplified only for illustration, but the present invention is not limited thereto, and change and addition can be made therein so far as they are not against the technical concept of the present invention that can be recognized by those skilled in the art from the claims, the brief description of the present invention and the description of the drawings.

For example, while the present invention has been described with reference to the case where a coated formed product comprising a coat layer containing a pigment is ground and regenerated for recycling, it goes without saying that the same effect can be exerted also when a surface coat-free formed product having a surface-coated pigment incorporated therein is regenerated.

### Industrial Applicability

The present invention can be used to recycle a formed thermoplastic resin product.

## Claims

1. A formed regenerated thermoplastic resin product obtained by grinding a coated formed product mainly comprising a thermoplastic resin and at least partly coated with a coating compound mainly comprising a thermoplastic resin having compatibility with the thermoplastic resin with the coat left attached thereto, and then re-forming it, wherein the coating compound comprises a pigment incorporated therein, the pigment having been subjected to surface treatment with a resin having compatibility with the thermoplastic resin constituting the formed product and the thermoplastic resin constituting the coating compound.

2. The formed regenerated thermoplastic resin product as described in Claim 1, wherein the pigment is an inorganic and/or organic compound.

3. The formed regenerated thermoplastic resin product as described in Claim 1, wherein the pigment is an aluminum flake.

4. The formed regenerated thermoplastic resin product as described in Claim 2 or 3, wherein the thermoplastic resin constituting the coating compound is a thermoplastic acrylic resin or styrene-modified acrylic resin.

5. The formed regenerated thermoplastic resin product as described in Claim 3, wherein the aluminum flake is coated with an organic polymer.

6. The formed regenerated thermoplastic resin product as described in Claim 5, wherein the organic polymer is an acrylic resin.

7. The formed regenerated thermoplastic resin product as described in Claim 5, wherein the aluminum flake is coated with a copolymer obtained by dissolving an ethylenically unsaturated monomer in an organic solvent, and then subjecting the solution to heat polymerization in the presence of a polymerization initiator or by reacting at least two selected from the group consisting of oligomers and monomers having at least one polymerizable double bond.

8. The formed regenerated thermoplastic resin product as described in Claim 5, wherein the spread of the organic polymer over the aluminum flake is 0.5% by weight or more based on the weight of the aluminum flake.
